# EUROPÄISCHE PATENTSCHRIFT

(11) **EP 2 110 725 B1**
(45) Veröffentlichungstag und Bekanntmachung des Hinweises auf die Patenterteilung: **31.10.2012**
(21) Anmeldenummer: 08007603.7
(22) Anmeldetag: 18.04.2008
(51) Int. Cl.: G05B 19/418

(54) **System und Verfahren zur Zuordnung eines Gerätenamens**
System and method for allocating a device name
Système et procédé destinés à l'attribution d'un nom d'appareil

(43) Veröffentlichungstag der Anmeldung: 21.10.2009
(73) Patentinhaber: SIEMENS AKTIENGESELLSCHAFT, 80333 München (DE)
(72) Erfinder: Biehler, Georg, 90453 Nürnberg (DE); Molzahn, Ines, 91052 Erlangen (DE); Steindl, Günter, 92284 Poppenricht (DE)

(56) Entgegenhaltungen:
- US-A- 5 980 078
- US-A1- 2005 065 647

## Beschreibung

Die Anmeldung betrifft ein Verfahren und ein System zur Zuordnung eines Gerätenamens zu einem Automatisierungsgerät in einem Netzwerk mit flexibler Netzwerktopologie.

Heutzutage werden Automatisierungsgeräte in einem Kommunikationsnetzwerk im Rahmen der Automatisierungstechnik in der Regel über einen Gerätenamen identifiziert. Dieser wird im Gegensatz zu einer MAC-Adresse verwendet, da in einem Ethernetnetzwerk nicht gewünscht ist, den Anwender mit einer Hardwareadresse zu konfrontieren und zudem müsste bei einem Austausch eines Automatisierungsgerät eine neue MAC-Adresse vergeben werden, so dass im Rahmen der Projektierung des Netzwerkes die Adresse geändert werden müsste.

Die Gerätenamen werden den Automatisierungsgeräten bei ihrer Installation mitgeteilt. Dies kann beispielsweise über lokale Mittel, wie eine angeschlossene Tastatur oder bei sogenannten Embedded Automatisierungsgeräten durch eine "Taufe" von außen über ein entsprechendes Inbetriebnahmeprotokoll (z.B. DCP bei Profinet IO-Geräten) erfolgen. Der dem Automatisierungsgerät mitgeteilte Name wird lokal im Automatisierungsgerät gespeichert. Bei einem Austausch eines Automatisierungsgerätes, beispielsweise weil das Automatisierungsgerät defekt ist, muss der Name des Automatisierungsgeräts auf das neue, eingetauschte Automatisierungsgerät übertragen werden.

Die Übertragung kann heutzutage folgendermaßen durchgeführt werden:
Der Name des Automatisierungsgeräts kann auf ein Wechselmedium gespeichert werden, z.B. eine MMC-Karte und bei Austausch des Automatisierungsgeräts wird das Wechselmedium in das neue Automatisierungsgerät gesteckt.

Als Alternative kann nach dem Austausch des Automatisierungsgeräts der Anwender bzw. Werker über ein Programmiergerät dem neuen Automatisierungsgerät den Namen mitteilen.

Eine dritte Möglichkeit besteht in der Namensgebung ohne Wechselmedium durch eine das Kommunikationsnetzwerk kontrollierende speicherprogrammierbare Steuerung.

Vorteilhaft wäre, auf ein Wechselmedium verzichten zu können, insbesondere im Exschutzbereich, bei kleinen Baugruppen und auch aus Kostengründen. Zudem birgt die Interaktion eines Werkers, bei dem es sich in der Regel um Bedienpersonal ohne hohe Ausbildung handelt mit einem Programmiergerät die Gefahr der Fehlbedienung. Es wäre außerdem eine Einweisung des Bedienpersonals erforderlich, damit bei einem Gerätetausch die zu vergebenden Namen auch richtig vergeben werden.

Daher erfolgt heutzutage der Gerätetausch in der Regel ohne Wechselmedium, indem der neue Gerätename über die kontrollierende speicherprogrammierbare Steuerung vergeben wird. Die Namenvergabe erfolgt hierbei über einen sogenannten Aliasnamen, der sich aus der Nachbarschaft des ausgetauschten Automatisierungsgerätes ergibt. Wenn die Steuerung das ausgetauschte Automatisierungsgerät nicht findet, so verwendet sie die Alternativen Namen des Geräts, das sind in der Regel die Namen der direkt benachbarten Geräte und weist dann dem neuen Automatisierungsgerät unter Verwendung des alternativen bzw. Aliasnamen seinen originalen Namen zu. Durch diese Methode kann auf ein Wechselmedium oder auch den Einsatz eines Programmiergerätes verzichtet werden.

Bei einer flexiblen Netzwerktopologie ist diese Möglichkeit der Namensgebung über den alternativen Namen aus der Nachbarschaft jedoch nicht möglich, da mehrere Automatisierungsgeräte in einer flexiblen Netzwerktopologie den gleichen Nachbarn haben können. Wenn dann eines dieser mehreren Automatisierungsgeräte ausgetauscht wird, so ist sein Name nicht über den Namen des Nachbarn zu ermitteln, da dieser nicht eindeutig ist.

Dokument US 5,980,078 offenbart ein Prozess-Automatisierungssystem, welches dazu ausgebildet ist, neue, bisher dem System unbekannte Geräte zu erkennen und anzusprechen. Dazu liest das Prozess-Automatisierungssystem die entsprechenden kennzeichnenden Daten des neuen Geräts aus dem Gerät aus. In einer Datenbank des Systems kann das System optional auch noch weitere zusätzliche Daten zu einem solchen Gerät abrufen.

Dokument US 2005/0065647 offenbart ein Werkzeug-Wechselmodul, welches über ein Steuerungsmodul angesteuert werden kann. Dabei wird nach einem Wechsel des Werkzeugs eine Identifikations-Kennung des Werkzeugsmoduls vom System aus dem Werkzeugmodul ausgelesen, um das jeweilige Werkzeug erkennen zu können.

Die Aufgabe der vorliegenden Erfindung besteht daher darin, die Möglichkeit einer Zuordnung eines Gerätenamens zu einem Automatisierungsgerät bei flexibler Netzwerktopologie eindeutig und automatisch durchzuführen.

Die Aufgabe wird gelöst durch ein Verfahren zur Zuordnung eines Gerätenamens zu einem Automatisierungsgerät in einem Netzwerk mit flexibler Netzwerktopologie, bei dem mindestens einem Docking Port im Netzwerk mehrere Docking Units zugewiesen sind, von denen zu jedem Zeitpunkt nur eine aktiv ist, jeweils ein Automatisierungsgerät als Kopfgerät jeder der Docking Units fungiert, jede Docking Unit eine eindeutige Kennung im Netzwerk erhält und nach Austausch eines Kopfgerätes der Gerätename des Kopfgerätes über die Kennung der zu diesem Zeitpunkt aktiven Docking Units zugewiesen wird.

Die Aufgabe wird weiterhin gelöst durch ein System zur Zuordnung eines Gerätenamens zu einem Automatisierungsgerät in einem Netzwerk mit flexibler Netzwerktopologie, mit mehreren mindestens einem Docking Port im Netzwerk zugewiesenen Docking Units, wobei zu jedem Zeitpunkt nur eine der Docking Untis als aktive Docking Unit ausgebildet ist, die Docking Units jeweils ein Automatisierungsgerät als Kopfgerät aufweisen, jede Docking Unit eine eindeutige Kennung im Netzwerk aufweist und die Zuweisung des Gerätenamens nach Austausch eines Kopfgeräts über die Kennung der zu diesem Zeitpunkt aktiven Docking erfolgt.

Der Erfindung liegt die Erfahrung zugrunde, dass eine Namensgebung in einem Netzwerk über einen alternativen Namen eines Nachbargeräts erfolgen kann. Dies ist bei einer flexiblen Netzwerktopologie nicht möglich, da mehrere Automatisierungsgeräte den gleichen Nachbarn haben können. Als alternative zur Namensgebung über ein benachbartes Gerät wird daher hier die Namensgebung über die Kennung der Docking Unit, auf der das betreffende Automatisierungsgerät angeordnet ist, ermöglicht. Die Docking Unit hat eine eindeutige Kennung, eine sogenannte ID und wenn eine Docking Unit aktiviert wird im Rahmen einer flexiblen Netztopologie, beispielsweise über einen Werkzeugwechsler, dann kann das Kopfgerät, welches dann an den Werkzeugwechsler angeschlossen wird, seinen Namen über die Kennung der Docking Unit, die als Alternativname im System hinterlegt ist wieder zugewiesen bekommen.

Hierdurch wird ein Austausch von Kopfgeräten auf unterschiedlichen Docking Units, die beispielsweise Werkzeuge eines Werkzeugwechselsystems oder fahrerlose Einheiten eines fahrerlosen Systems repräsentieren, ermöglicht. Die Namensgebung nach Austausch des Automatisierungsgerätes bzw. des Kopfgerätes erfolgt einfach über die Identität der aktiven Docking Unit. Dabei dockt eine Docking Unit an einem Docking Port an, der fest im System ist, und der für alle Kopfgeräte der beteiligten Docking Units der gleiche Docking Port ist. Zu einem Zeitpunkt kann hierbei nur eine Docking Unit in dem Docking Ports andocken und somit ist auch nur eine Docking Unit aktiv. Dadurch wird eine eindeutige Namensgebung für ein ausgetauschtes Automatisierungsgerät auf der Docking Unit gewährleistet. Die Namensgebung kann somit automatisch über einen Controller bzw. eine speicherprogrammierbare Steuerung erfolgen.

Eine weitere vorteilhafte Ausbildung der Erfindung ist dadurch gekennzeichnet, dass die zu einem Docking Port gehörenden Docking Units ein Docking System mit einer Systemkennung bilden. Vorteilhafter Weise werden hierdurch alle Docking Units, die an einem bestimmten Docking Ports angeschlossen werden können, zu einem Docking System zusammengefasst, welches eine eigene Kennung bzw. ID aufweist. Hierdurch wird ein einfaches Aktivieren der Docking Units innerhalb des Systems ermöglicht.

Eine weitere vorteilhafte Ausbildung der Erfindung ist dadurch gekennzeichnet, dass ein oder mehrere Automatisierungsgeräte, die topologisch hinter dem Kopfgerät liegen, derselben Docking Unit zugewiesen werden. Hierdurch wird gewährleistet, dass eine Docking Unit mit einer Kennung bzw. einer ID alle Automatisierungsgeräte umfasst, die beispielsweise auf einem Werkzeug eines Werkzeugwechselsystems liegen. Die Automatisierungsgeräte sind alle unter der gleichen Docking Unit ID im Netzwerk hinterlegt.

Eine weitere vorteilhafte Ausbildung der Erfindung ist dadurch gekennzeichnet, dass ein Automatisierungsgerät aktiviert wird, wenn es das erste zu aktivierende Automatisierungsgerät eines Docking Systems ist oder wenn bisher nur Automatisierungsgeräte derselben Docking Unit aktiviert sind. Dies gewährt, dass nur ein Automatisierungsgerät aktiviert werden kann, welches auch den entsprechenden Docking Ports über das Docking System zugewiesen ist, und dass es nur aktiviert werden kann, wenn weitere Automatisierungsgeräte, die innerhalb des Docking Systems mit der gleichen Systemkennung bereits aktiviert sind auch derselben Docking Unit angehören. Ein Automatisierungsgerät kann somit nur aktiviert werden, wenn keine Konflikte mit Automatisierungsgeräten anderer Docking Units innerhalb des Docking Systems auftreten. Wenn das Automatisierungsgerät überhaupt nicht zum genannten Docking System gehört, d.h. im Grunde genommen auf keinem Werkzeug angebracht ist, welches an dem entsprechenden Werkzeugwechsler andocken kann, so kann von System eine Fehlermeldung gegeben werden und das entsprechende Gerät wird nicht aktiviert.

Eine weitere vorteilhafte Ausbildung der Erfindung ist dadurch gekennzeichnet, dass eine Aktivierung einer Docking Unit zugelassen wird, wenn alle Automatisierungsgeräte des Docking Systems deaktiviert sind. Im zentralen System kann somit eine Aktivierung der Docking Unit nur erfolgen, wenn keine Konflikte mit aktivierten Automatisierungsgeräten anderer Docking Units vorliegen. Es kann somit sichergestellt werden, dass immer nur eine Docking Unit z.Z. als aktive Docking Unit am Docking Port angedockt ist.

Eine weitere vorteilhafte Ausbildung der Erfindung ist dadurch gekennzeichnet, dass die Docking Units die wechselbaren Werkzeuge eines Werkzeugwechslers in der Automatisierung repräsentieren. Hierbei sind auf vorteilhafte Weise alle Automatisierungsgeräte, die sich auf einem derartigen Werkzeug eines Werkzeugwechslers befinden, zu einer logischen Einheit zusammengefasst, die über ihre ID direkt ansprechbar ist, und die auch nur als Gesamtheit vom System aktiviert werden kann.

Eine weitere vorteilhafte Ausbildung der Erfindung ist dadurch gekennzeichnet, dass die Docking Units die mobilen Einheiten eines fahrerlosen Transportsystems repräsentieren. Ebenfalls ist hier die Übereinstimmung von einer realen mit einer logischen Einheit gewährleistet. Neben der Anwendbarkeit für ein Werkzeugswechselsystem ist somit die vorliegende Erfindung auch geeignet für flexible Netzwerke, wie sie beispielsweise für fahrerlose Transportsysteme vorhanden sind. Hierbei sind mehrere bewegliche bzw. mobile Einheiten eines derartigen Systems jeweils mit ihren eigenen Automatisierungsgeräten ausgestattet, wobei die Automatisierungsgeräte einer mobilen Einheit jeweils eine Docking Unit mit der entsprechenden Kennzeichnung abbilden. Die Docking Units können dann auch in einem fahrerlosen Transportsystem an einen Docking Ports andocken und sich somit an das zentrale Netzwerk andocken.

Im Folgenden wird die Erfindung durch die Figuren näher beschrieben und erläutert. Es zeigen:
- FIG 1: eine schematische Netzwerkdarstellung aus dem Stand der Technik,
- FIG 2: eine schematische Darstellung eines Netzwerkes mit flexibler Netzwerktopologie,
- FIG 3: einen Eingabeeditor zur Eingabe von Docking Units zu einem Docking Ports,
- FIG 4: einen topologischen Editor zur Visualisierung eines projektierten flexiblen Netzwerkes.

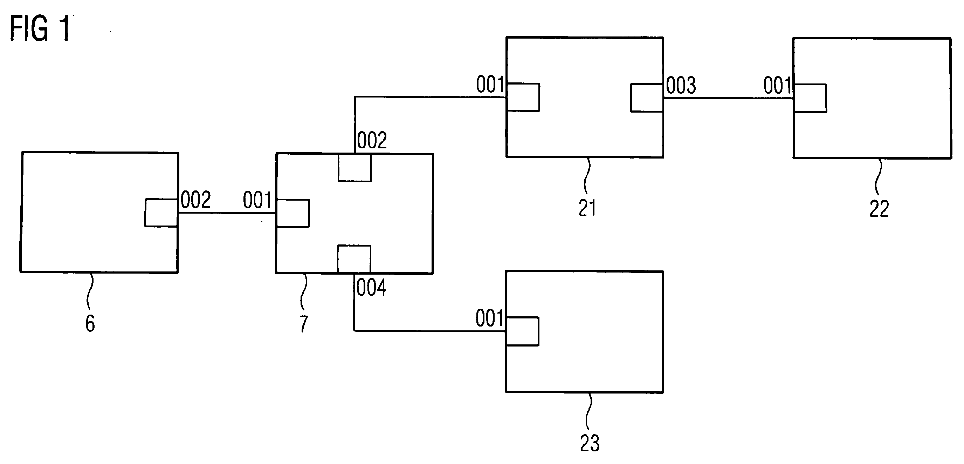

FIG 1 zeigt ein beliebiges Netzwerk mit einer Steuerung 6 bzw. einem Controller, einem Switch 7 und drei weiteren beteiligten im Netzwerk, die im Folgenden als Automatisierungsgeräte bezeichnet werden 21,22,23. Die Automatisierungsgeräte sowie das Switch 7 und der Controller verfügen zur Kommunikation jeweils über Ports, über die die zu kommunizierenden Daten an die weiteren Teilnehmer des Netzwerks versendet werden. Ein Automatisierungsgerät, wie beispielsweise das Automatisierungsgerät 21 in FIG 1 hat hierbei in dem Netzwerk zwei Nachbarn, den Switch 7 und das weitere Automatisierungsgerät 22. Die Namensgebung bei Austausch des Automatisierungsgeräts 21 kann in einem Netzwerk wie in FIG 1 dargestellt wird auf Basis der alternativen Namen bzw. der Aliasnamen erfolgen. Hierbei wird für das Automatisierungsgerät 21 als alternativer Name der Switch 7 mit dem Port 002 und das Automatisierungsgerät 22 mit dem Port 001 angegeben. Wenn der Controller 6 bzw. die speicherprogrammierbare Steuerung das Automatisierungsgerät 21 im Netz nicht findet, so verwendet die Steuerung einen der alternativen Namen des Gerätes und weist, wenn ein Gerät unter dem alternativen Namen gefunden wurde, dem Gerät seinen originalen Namen wieder zu. Daher kann bei einem Netzwerk mit definierter Netzwerktopologie auf den Einsatz eines Wechselmediums zur Namensgebung nach Austausch bzw. auf den Einsatz eines Programmiergerätes, mit Hilfe dessen man den ausgetauschten Automatisierungsgerät einen Namen wieder zuweisen kann, verzichtet werden.

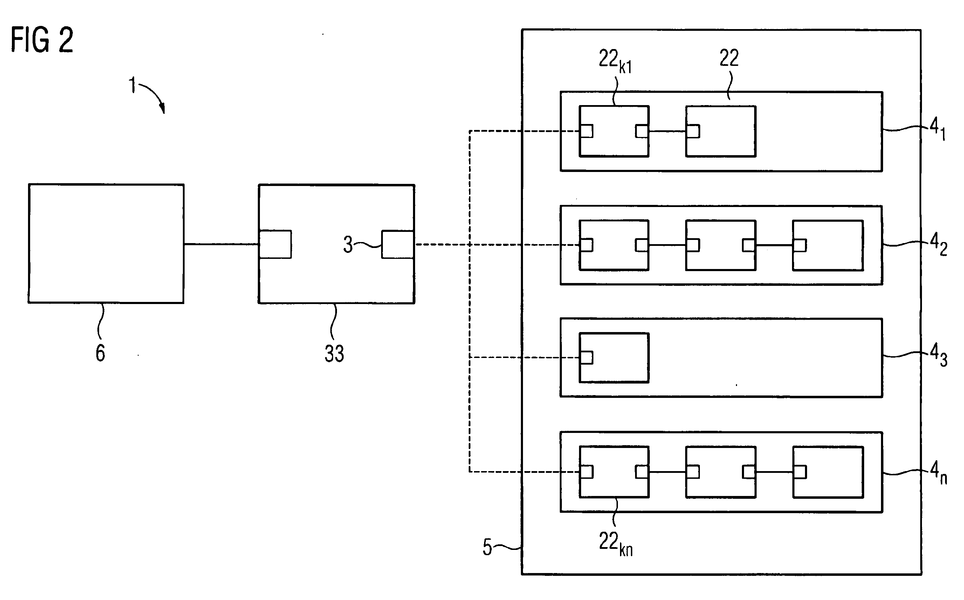

FIG 2 zeigt ein Netzwerk mit flexibler Netzwerktopologie, wie es beispielsweise bei einem Werkzeugwechselsystem oder bei einem fahrerlosen Transportsystem vorkommt. Bei einem Werkzeugwechselsystem greift ein Roboter in Abhängigkeit von der jeweils auszuführenden Tätigkeit auf verschiedene Werkzeuge, die an einem sogenannten Bahnhof abgelegt sind, zu. Die Werkzeuge an sich sind abgeschaltet und liegen nur in dem Bahnhof zur Aufbewahrung. Der Roboter wird bei einem Werkzeugwechselsystem so gesteuert, dass er das Werkzeug, das er für seine nächste auszuführende Tätigkeit benötigt, aus dem Bahnhof herausnimmt. Die Werkzeuge selber weisen hierbei jeweils wieder eigene Automatisierungsgeräte auf, d.h. sie müssen, nachdem sie vom Roboter aufgenommen werden, an das Netzwerk angebunden werden. Hierbei weist der Roboter selber eine Docking Station auf 33, die über einen Port 3 verfügt. Nach Aufnahme der Werkzeuge, werden über diesen Docking Port 3 die auf den Werkzeugen liegenden Automatisierungsgeräte 22 an das Netzwerk 1 gebunden. Die Werkzeuge eines derartigen Werkzeugwechselsystems verfügen, wie bereits erwähnt, über eigene Automatisierungsgeräte 22. Die Automatisierungsgeräte werden logisch zu sogenannten Docking Units 4₁...n zusammengefasst. Hierbei gehören alle Automatisierungsgeräte, die räumlich auf einem Werkzeug liegen auch zu einer Docking Unit. Jede Docking Unit weist eine eigene Kennung, eine sogenannte ID auf. Alle Docking Units 4₁...n, die Werkzeuge repräsentieren, die von dem entsprechenden Roboter aufgenommen werden können, und somit an einem Docking Ports 3 angeschlossen werden können, bilden gemeinsam ein sogenanntes Docking System 5. Das Docking System selbst weist wieder eine Kennung, eine System-kennung bzw. eine ID auf. Jede Docking Unit 4₁...n hat ein sogenanntes Kopfgerät 22K₁...n. Das Kopfgerät ist das erste Automatisierungsgerät auf einem Werkzeug.

Das Kopfgerät wird nach Aufnahme des Werkzeugs durch den Roboter direkt mit dem Docking Port 3 des Werkzeugwechslers 33 verbunden. Als Nachbar im Netz flexibler Netzwerktopologien haben also alle Kopfgeräte 22K₁...n den gleichen Docking Port 3. Somit haben sie im Netzwerk auch den gleichen Nachbarn, der für einen Aliasnamen zur Verfügung stünde. Jede Docking Unit 4₁...n weist jedoch ihre eigene Kennung auf, so dass statt des Docking Ports 3 die Kennung der Docking Unit als Aliasname zur Verfügung steht. Damit kann, wenn eine der Kopfgruppen 22K₁...n ausgetauscht worden ist, ein Name im Netzwerk 1 durch den Controller 6 eindeutig wieder zugewiesen werden, da im System eindeutig bekannt ist, welche Docking Unit gerade aktiv ist. Der Controller 6 weiß, welches Werkzeug der Werkzeugwechsler bzw. Roboter aufgegriffen hat.

Eine Aktivierung des entsprechenden Werkzeugs bzw. der Automatisierungsgeräte auf dem Werkzeug erfolgt nur unter zwei Voraussetzungen: Entweder ist das Automatisierungsgerät, welches aktiviert werden soll, das erste, welches innerhalb des Docking Systems 5 aktiviert wird. Dies kann über die Systemkennung des Docking Systems 5 verifiziert werden. Wenn noch kein anderer Teilnehmer in dem Docking System aktiviert ist, dann kann das Automatisierungsgerät ohne weiteres aktiviert werden. Dies funktioniert jedoch nur unter der Voraussetzung, dass das Automatisierungsgerät auch zu dem Docking System selbst gehört.

Eine Aktivierung des Automatisierungsgeräts kann auch erfolgen, wenn bereits Automatisierungsgeräte aktiviert sind, diese jedoch alle zur gleichen Docking Unit gehören. Somit wird sichergestellt, dass immer nur ein Werkzeug, welches im vorliegenden System durch eine Docking Unit repräsentiert ist, zur gleichen Zeit aktiv ist. Die Namensgebung eines ausgetauschten Kopfgerätes erfolgt dann über die zu dem Zeitpunkt aktive Docking Unit, die mit Hilfe ihrer ID eindeutig erkannt wird und über die somit bekannt ist, welchen Namen das Kopfgerät dieser Docking Unit trägt. Somit kann über den Controller bei einem Werkzeugwechsel automatisch eine Namensgebung bzw. Zuweisung für ein Kopfgerät erfolgen, da zu jedem Zeitpunkt bekannt ist, welches der möglichen Kopfgeräte eines Docking Systems denn jetzt am Docking Port wirklich angekoppelt ist.

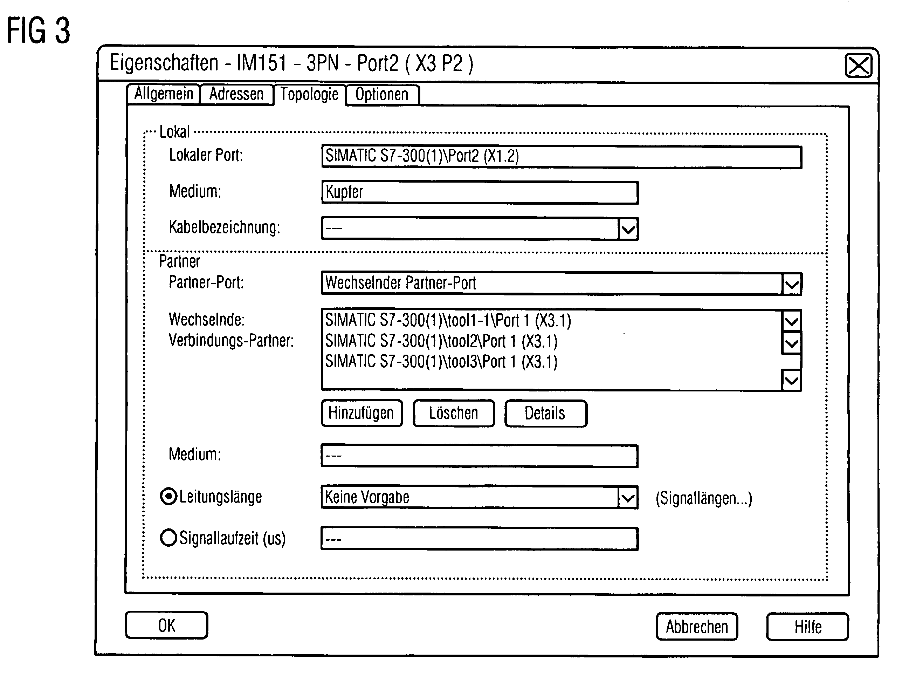

FIG 3 zeigt einen möglichen Editor für die Projektierung eines derartigen Systems. Hierbei wird einem Docking Port, beispielsweise dem lokalen Port "Tool Changer" ein wechselnder Partner Port zugewiesen. Der Partner Port wird mit Hilfe des Editors dann projektiert, indem beispielsweise die verschiedenen Docking Units mit ihren Automatisierungsgeräten dem Partner Port als Alternativen zugewiesen werden.

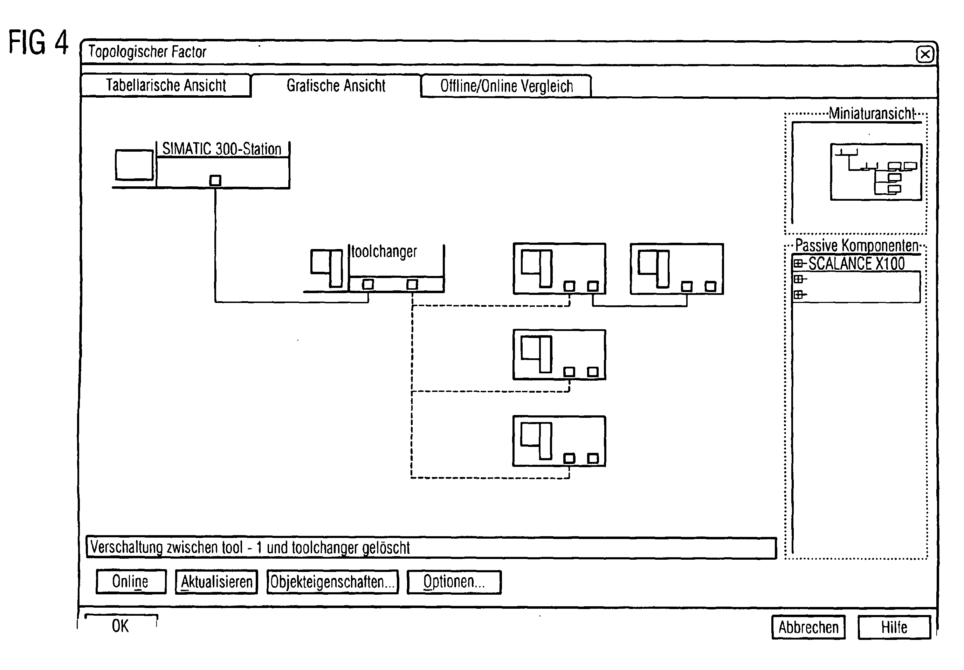

Mit Hilfe einer topologischen Ansicht gemäß FIG 4 kann ein Projekteur dann visualisieren lassen, wie sein Netzwerk mit flexibler Netzwerktopologie sich darstellt. Hierbei wird der Werkzeugwechsler bzw. Tool Changer über eine Steuerung angesprochen. An den Werkzeugwechsler können dann die drei Docking Units, von denen in dem gezeigten Beispiel die erste zwei Automatisierungsgeräte und die anderen beiden jeweils nur ein Automatisierungsgerät aufweisen, angeschlossen werden. Die gestrichelten Linien des Topologieeditors visualisieren, dass hier ein Austausch der Werkzeuge ermöglicht wird, und dass unterschiedliche Kopfgeräte an den Werkzeugwechsler angeschlossen werden können.

Durch die beschriebene Erfindung ist es möglich, einem ausgetauschten Automatisierungsgerät, welches im Rahmen einer flexiblen Netzwerktopologie als Kopfgerät und damit als Kontakt zu einem wechselnden Partner Port fungiert, einen Namen ohne Wechselmedium bzw. ohne Programmiergerät zuzuweisen. Dies wird dadurch gewährleistet, dass in einem Docking System nur noch Automatisierungsgeräte derselben Docking Unit zu einer Zeit aktiviert werden können. Dadurch ist zu jedem Zeitpunkt der alternative Name des ausgetauschten Docking Geräts einer Docking Unit wieder eindeutig. Dies bringt insbesondere den Vorteil, dass auf ein Wechselmedium verzichtet werden kann, welches insbesondere in Umgebungen, die eine hohe Schutzart erfordern, beispielsweise einen Ex-Schutz, von Vorteil ist. Ebenso ist es für kleine Automatisierungsgeräte vorteilhaft, da diese oft keinen ausreichenden Platz für ein Wechselmedium haben. Insgesamt können die Automatisierungsgeräte gekapselt werden und auch von ihrer Bauweise her kleiner angelegt werden. Nach dem Ausfall und dem Austausch eines Automatisierungsgerätes ist eine sichere, automatische und damit auch fehlerfreie Namensgebung der ausgewechselten Automatisierungsgeräte möglich. Zudem gewährleistet die Erfindung durch die Verriegelung der Systemschnittstelle, welche mittels Aktivieren und Deaktivieren erfolgt, eine Sicherheit dahingehend, dass nur Geräte einer einzigen Docking Unit bzw. einer mobilen Einheit eines fahrerlosen Transportsystems zur gleichen Zeit aktiviert werden können. Hierdurch wird vermieden, dass Unklarheiten bezüglich der Aktivierung vorkommen welche dann ihrerseits zu einer Fehlermeldung führen würden. Eine gemischte Aktivierung kann hierdurch beispielsweise verhindert werden.

## Patentansprüche

1. Verfahren zur Zuordnung eines Gerätenamens zu einem Automatisierungsgerät(22K) in einem Netzwerk (1) mit flexibler Netzwerktopologie, bei dem
• mindestens einem Docking Port (3) im Netzwerk mehrere Docking Units (4₁...n) zugewiesen sind, von denen zu jedem Zeitpunkt nur eine aktiv ist,
• jede der Docking Units (4₁...n) jeweils ein Automatisierungsgerät umfasst, welches als Kopfgerät (22K₁...n) für die jeweilige Docking Unit (4₁...n) fungiert,
• jede Docking Unit (4₁...n) eine eindeutige Kennung im Netzwerk erhält und
• nach Austausch eines Kopfgeräts (22K₁) der Gerätename des Kopfgerätes über die Kennung der zu diesem Zeitpunkt aktiven Docking Unit (4₁) zugewiesen wird.

2. Verfahren nach Anspruch 1, bei dem die zu einem Docking Port (3) gehörenden Docking Units (4₁...n) ein Docking System (5) mit einer Systemkennung bilden.

3. Verfahren nach Anspruch 1 oder 2, bei dem ein oder mehrere Automatisierungsgeräte (22K), die im Netzwerk (1) topologisch hinter dem Kopfgerät (22K₁...n) liegen, derselben Docking Unit (4₁...n) zugewiesen werden.

4. Verfahren nach einem der vorhergehenden Ansprüche, bei dem ein Automatisierungsgerät (22K)aktiviert wird, wenn es das erste zu aktivierende Automatisierungsgerät eines Docking Systems ist oder wenn bisher nur Automatisierungsgeräte derselben Docking Unit (4₁...n) aktiviert sind.

5. Verfahren nach einem der Ansprüche 1 bis 3, bei dem eine Aktivierung einer Docking Unit (4₁...n) zugelassen wird, wenn alle Automatisierungsgeräte des Docking Systems deaktiviert sind.

6. Verfahren nach einem der bisherigen Ansprüche, bei dem die Docking Units (4₁...n) die auswechselbaren Werkzeuge eines Werkzeugwechslers in der Automatisierung repräsentieren.

7. Verfahren nach einem der Ansprüche 1 bis 5, bei dem die Docking Units (4₁...n) die mobilen Einheiten eines fahrerlosen Transportsystems repräsentieren.

8. System zur Zuordnung eines Gerätenamens zu einem Automatisierungsgerät in einem Netzwerk mit flexibler Netzwerktopologie, mit
• mehreren mindestens einem Docking Port (3) im Netzwerk zugewiesenen Docking Units (4₁...n), wobei zu jedem Zeitpunkt nur eine der Docking Units (4₁...n) als aktive Docking Unit (4₁...n) ausgebildet ist, wobei weiterhin
• jede der Docking Units (4₁...n) jeweils ein Automatisierungsgerät als Kopfgerät aufweisen,
• jede Docking Unit eine eindeutige Kennung im Netzwerk aufweist und
• die Zuweisung des Gerätenamens nach Austausch eines Kopfgeräts über die Kennung der zu diesem Zeitpunkt aktiven Docking Unit (4₁...n) erfolgt.

9. System nach Anspruch 8, bei dem die zu einem Docking Port (3) gehörenden Docking Units (4₁...n) ein Docking System (5) mit einer Systemkennung bilden.

10. System nach Anspruch 8 oder 9, bei dem ein oder mehrere Automatisierungsgeräte, die topologisch hinter dem Kopfgerät liegen, derselben Docking Unit (4₁...n) zugewiesen werden.

11. System nach einem der Ansprüche 8 bis 10, bei dem ein Automatisierungsgerät aktiviert vorgesehen ist, wenn es das erste zu aktivierende Automatisierungsgerät eines Docking Systems (5) ist oder wenn bisher nur Automatisierungsgeräte derselben Docking Unit (4₁...n) aktiviert sind.

12. System nach einem der Ansprüche 8 bis 10, bei dem eine Aktivierung einer Docking Unit (4₁...n) erfolgt, wenn alle Automatisierungsgeräte des Docking Systems (5) deaktiviert sind.

13. System nach einem der bisherigen Ansprüche, bei dem die Docking Units (4₁...n) die auswechselbaren Werkzeuge eines Werkzeugwechslers in der Automatisierung repräsentieren.

14. System nach einem der Ansprüche 8 bis 12, bei dem die Docking Units (4₁...n) die mobilen Einheiten eines fahrerlosen Transportsystems repräsentieren.

## Claims

1. Method for assigning a device name to an automation device (22K) in a network (1) with a flexible network topology, wherein
• at least one docking port (3) in the network is assigned a plurality of docking units (4₁..n), of which only one is active at any point in time,
• each of the docking units (4₁...n) comprises an automation device which acts as a head device (22K₁...n) for the respective docking unit (4₁..n),
• each docking unit (4₁..n) receives a unique identifier in the network and
• after the exchange of a head device (22K₁), the device name of the head device is assigned to the docking unit (4₁) which is active at this point in time via the identifier.

2. Method according to claim 1, wherein the docking units (4₁...n) belonging to a docking port (3) form a docking system (5) with a system identifier.

3. Method according to claim 1 or 2, wherein one or more automation devices (22K) located topologically behind the head device (22K₁...n) in the network (1) are assigned to the same docking unit (4₁..n) .

4. Method according to one of the preceding claims, wherein an automation device (22K) is activated if it is the first automation device of a docking system to be activated or if until now only automation devices of the same docking unit (4₁..n) are activated.

5. Method according to one of claims 1 to 3, wherein an activation of a docking unit (4₁..n) is allowed if all automation devices of the docking system are deactivated.

6. Method according to one of the preceding claims, wherein the docking units (4₁..n) represent the interchangeable tools of a tool changer in automation.

7. Method according to one of claims 1 to 5, wherein the docking units (4₁..n) represent the mobile units of a driverless transport system.

8. System for assigning a device name to an automation device in a network with a flexible network topology, with
• a plurality of docking units (4₁..n) assigned to at least one docking port (3) in the network, wherein at any point in time only one of the docking Units (4₁..n) is configured as an active docking unit (4₁..n), wherein further
• each of the docking units (4₁..n) has an automation device as a head device,
• each docking unit has a unique identifier in the network and
• the assignment of the device name after the exchange of a head device is effected via the identifier of the docking unit (4₁..n) which is active at this point in time.

9. System according to claim 8, wherein the docking units (4₁..n) belonging to a docking port (3) form a docking system (5) with a system identifier.

10. System according to claim 8 or 9, wherein one or more automation devices that are located topologically behind the head device are assigned to the same docking unit (4₁...n).

11. System according to one of claims 8 to 10, wherein an automation device is provided activated if it is the first automation device of a docking system (5) to be activated or if until now only automation devices of the same docking unit (4₁..n) are activated.

12. System according to one of claims 8 to 10, wherein an activation of a docking unit (4₁...n) occurs if all automation devices of the docking system (5) are deactivated.

13. System according to one of the preceding claims, wherein the docking units (4₁..n) represent the interchangeable tools of a tool changer in automation.

14. System according to one of claims 8 to 12, wherein the docking units (4₁...n) represent the mobile units of a driverless transport system.

## Revendications

1. Procédé pour affecter un nom d'appareil à un appareil d'automatisation (22K) dans un réseau (1) avec une topologie de réseau flexible, dans lequel :
- plusieurs unités d'amarrage (4₁ ... n), dont à chaque instant seule une est active, sont affectées à au moins un port d'amarrage (3) dans le réseau ;
- chacune des unités d'amarrage (4₁ ... n) comprend respectivement un appareil d'automatisation qui sert d'appareil de tête (22K₁ ... n) pour l'unité d'amarrage respective (4₁ ... n) ;
- chaque unité d'amarrage (4₁ ... n) reçoit un identifiant univoque dans le réseau ; et
- après le remplacement d'un appareil de tête (22K₁), le nom d'appareil de l'appareil de tête est affecté via l'identifiant à l'unité d'amarrage (4₁) qui est active à cet instant.

2. Procédé selon la revendication 1, dans lequel les unités d'amarrage (4₁ ... n) qui appartiennent à un port d'amarrage (3) forment un système d'amarrage (5) avec un identifiant de système.

3. Procédé selon la revendication 1 ou 2, dans lequel un ou plusieurs appareils d'automatisation (22K) situés topologiquement derrière l'appareil de tête (22K₁ ... n) dans le réseau (1) sont affectés à la même unité d'amarrage (4₁ ... n).

4. Procédé selon l'une des revendications précédentes, dans lequel un appareil d'automatisation (22K) est activé lorsqu'il est le premier appareil d'automatisation d'un système d'amarrage à activer ou si seuls sont jusqu'alors activés des appareils d'automatisation de la même unité d'amarrage (4₁ ... n) .

5. Procédé selon l'une des revendications 1 à 3, dans lequel une activation d'une unité d'amarrage (4₁ ... n) est autorisée lorsque tous les appareils d'automatisation du système d'amarrage sont désactivés.

6. Procédé selon l'une des revendications précédentes, dans lequel les unités d'amarrage (4₁ ... n) représentent les outils remplaçables d'un échangeur d'outils dans l'automatisation.

7. Procédé selon l'une des revendications 1 à 5, dans lequel les unités d'amarrage (4₁ ... n) représentent les unités mobiles d'un système de transport sans conducteur.

8. Système pour affecter un nom d'appareil à un appareil d'automatisation dans un réseau avec une topologie de réseau flexible, avec :
- plusieurs unités d'amarrage (4₁ ... n) affectées à au moins un port d'amarrage (3) dans le réseau, à chaque instant seule une des unités d'amarrage (4₁ ... n) se présentant comme unité d'amarrage (4₁ ... n) active et, en outre,
- chacune des unités d'amarrage (4₁ ... n) comportant respectivement un appareil d'automatisation en tant qu'appareil de tête,
- chaque unité d'amarrage présentant un identifiant univoque dans le réseau et
- l'affectation du nom d'appareil s'effectuant, après le remplacement d'un appareil de tête, via l'identifiant de l'unité d'amarrage (4₁ ... n) qui est active à cet instant.

9. Système selon la revendication 8, dans lequel les unités d'amarrage (4₁ ... n) qui appartiennent à un port d' amarrage (3) forment un système d'amarrage (5) avec un identifiant de système.

10. Système selon la revendication 8 ou 9, dans lequel un ou plusieurs appareils d'automatisation situés topologiquement derrière l'appareil de tête sont affectés à la même unité d'amarrage (4₁ ... n) .

11. Système selon l'une des revendications 8 à 10, dans lequel il est prévu qu'un appareil d'automatisation est activé lorsqu'il est le premier appareil d'automatisation d'un système d'amarrage (5) à activer ou si seuls sont jusqu'alors activés des appareils d'automatisation de la même unité d'amarrage (4₁ ... n).

12. Système selon l'une des revendications 8 à 10, dans lequel il y a activation d'une unité d'amarrage (4₁ ... n) lorsque tous les appareils d'automatisation du système d'amarrage (5) sont désactivés.

13. Système selon l'une des revendications précédentes, dans lequel les unités d'amarrage (4₁ ... n) représentent les outils remplaçables d'un échangeur d'outils dans l'automatisation.

14. Système selon l'une des revendications 8 à 12, dans lequel les unités d'amarrage (4₁ ... n) représentent les unités mobiles d'un système de transport sans conducteur.
